## Europäisches Patentamt

## European Patent Office

## Office européen des brevets

(19)

(11) Publication number: **0 107 497**
A2

# EUROPEAN PATENT APPLICATION

(21) Application number: 83306428.0

(22) Date of filing: 24.10.83

(51) Int. Cl.³: **C 01 B 3/00**, C 01 B 3/56

(30) Priority: 25.10.82 US 436521

(71) Applicant: MPD Technology Corporation, 681 Lawlins Road, Wyckoff New Jersey 07481 (US)

(43) Date of publication of application: 02.05.84 Bulletin 84/18

(72) Inventor: Meyerhorff, Robert Wagner, 5 Robalene Drive, Goshen New York, NY 10924 (US)

(84) Designated Contracting States: DE FR GB SE

(74) Representative: Lockwood, Barbara Ann et al, Thames House (Fifth Floor) Millbank, London SW1P 4QF (GB)

(54) Production of hydrogen.

(57) A reactor system is provided for the delivery of hydrogen on site for hydrogen users requiring of the order of 28 to 2800 $m^3$ hydrogen per day. The system consists of a flow through reactor in which cracked ammonia is passed over a hydride bed.

0107497

- 1 -

## Production of Hydrogen

The present invention relates to apparatus and a method for the production and delivery of hydrogen, and particularly to an on-site production system for hydrogen users requiring of the order of 28 to 2800 $m^3$ of hydrogen per day.

Large industrial users of hydrogen who consume more than about $10^4$ $m^3$/day of hydrogen usually generate their own hydrogen by the steam reforming of methane. Users of less than this amount normally purchase hydrogen from a merchant supplier. Such purchasers fall into three categories, the small user, consuming around two cylinders a year, i.e. approximately 28 $m^3$/day, the intermediate user in the range 28 $m^3$/day to 2.8 x $10^3$ $m^3$/day and the large purchaser/user consuming more than about 2.8 x $10^3$ $m^3$/day. Small users have a very high unit cost since they are paying primarily for packaging and delivery. However since the quantities purchased are so small the overall annual cost is too low to justify the use of alternative sources of supply. At the other end of the scale, purchasers of more than about 2.8 x $10^3$ $m^3$/day can economically buy liquid hydrogen which can be transported in large quantities at relatively low cost compared with gas transportation and such users are consequently well served. However the intermediate user of hydrogen is poorly served and pays a high unit rate. Such users are seeking more economic methods of obtaining hydrogen.

It has been proposed in US patent 4 036 944 to recover hydrogen from a waste gas stream containing a mixture of hydrocarbons using metal hydrides. Not all hydrogen users requiring on-site hydrogen supply necessarily have access to a suitable waste gas stream however. It has also been proposed to separate hydrogen from dissociated ammonia by absorption/desorption on heated palladium. However the high costs associated

- 2 -

with the use of palladium-based separation has generally led away from this technology.

The present invention is based on the discovery that the use of metal hydride to separate hydrogen from dissociated ammonia provides a cost effective system for the supply of hydrogen to intermediate-sized users of merchant hydrogen.

According to the present invention there is provided a reactor system for the delivery of 28 to 2800 $m^3$/day of hydrogen on site from a dissociated ammonia feed stream by use of a bed of hydridable material which exothermically and selectively absorbs hydrogen from the feed stream and endothermically desorbs hydrogen on demand characterised in that the system comprises at least one flow through reactor having inner and outer heat exchange shells with a bed of hydridable material located coaxially therebetween, and means for introducing in use, the feed stream to the hydride bed and means for permitting the flow of waste gas or hydrogen therefrom with means for providing uniform gas flow with low pressure drop across the bed, and means for circulating fluid through the heat exchanger shells whereby heat may be extracted therefrom during absorption of hydrogen from the feed stream and may be supplied thereto when hydrogen is desorbed from the hydride bed.

It is an important feature of the invention that the dimensions of the reactor system govern the delivery rate of hydrogen from the system. Thus the system may be tailored exclusively to the needs of the hydrogen user. The performance of the reactor system may be predicted semi-quantitatively by the equation

$$F = (D_1 + D_2)^2 L^2 \pi K \rho \, \Delta T / \Delta Ht$$

where

F = Hydrogen flow rate, moles/sec.

$D_1$ = Diameter of inner wall of the hydride container, cm.

$D_2$ = Diameter of outer wall of the hydride container, cm.

L = Length of hydride bed, cm.

$\pi$ = Constant = 3.14

K = Thermal conductivity of hydride bed, $cal.sec^{-1}.cm^{-1}.K^{-1}$

$\rho$ = Density of hydride bed, g/cc

$\Delta T$ = Temperature difference between reactor wall and mid-point of the hydride bed, K

$\Delta H$ = Heat of adsorption of hydride, cal/mole

t = Charging or discharge time, sec.

and $D_2$ is related to $D_1$ by the relationship:

$$D_2 = D_1 + 8 [Kt \Delta T/ \Delta H \rho W] \qquad (2)$$

where W = Moles of hydrogen per gram of hydride.

Rearrangement of Equation 2 gives

$$t\Delta T = 0.0156 (D_2-D_1)^2 \Delta H \rho W/K \qquad (3)$$

or if t is in hours

$$t\Delta T = 4.34 \times 10^{-6} (D_2-D_1)^2 \Delta H \rho W/K \qquad (4)$$

In a preferred system of the invention the reactor system is capable of continuous delivery of hydrogen by use of two or more flow-through reactors in tandem operationally connected so that at any time at least one of the reactors is capable of hydrogen delivery by desorption from the hydride bed therein. By appropriate connections one, or more, reactors may be used to absorb hydrogen from the dissociated ammonia feed stream whilst hydrogen is being desorbed from a further reactor.

The term "flow through reactor" as used herein applies to one in which a waste stream having a hydrogen concentration less than that of the inlet feed stream is exhausted from the reactor during the charging cycle thereby preventing a build up of non-hydrogen components of the feed stream in the reactor system.

By use of a reactor system in accordance with the present invention it is possible to reduce the

- 4 -

the cost of hydrogen to users in the intermediate range by a factor of up to 2.

The heat transfer characteristics of the flow-through reactor of the invention are at the heart of its performance. The heat flow is interrelated to flow rate, pressure and recovery. These variables operate to establish the effective hydrogen absorption pressure. This, in turn, determines the peak temperature within the pellet bed, which relative to the coolant temperature establishes the temperature difference, $\Delta T$, causing heat flow. The flow-through reactor requires no high pressure containment or components so that it can be relatively large without being massive and has a high surface-to-volume ratio to provide good heat transfer. By applying hydrogen delivery requirements to a relatively simple performance model based on heat transfer considerations the necessary dimensions may readily be deduced.

Coordinated reactors can be designed to act alternately so that while one unit is absorbing hydrogen, the other is desorbing hydrogen. More than two units can be used with appropriate timing. For example, if the discharge time (DC) is 30 minutes and the charging time (C) is 60minutes, then with 3 reactors cycled as shown below, a continuous flow can be maintained with one reactor delivering hydrogen while 2 are being charged:

| Time | Reactor 1 | Reactor 2 | Reactor 3 |
|------|-----------|-----------|-----------|
| T + 0 | DC | | C |
| 30 | C | DC | |
| 60 | | | DC |
| 90 | DC | C | C |
| 120 | | DC | |
| 150 | C | | DC |
| 180 | | | |

In this way hydrogen can be continuously provided. The heat necessary for desorption can be provided in part by the heat given off during the absorption phase and by an external source. For example, hot water may be used to provide required heat and cold water may be circulated in the heat exchanger to aid in the absorption phase.

The hydridable materials used in the reactor system of the present invention are metals and alloys which can react with hydrogen in a chemically reversible manner to form hydride compounds. One class of hydridable material is definable by the formula $AB_x$ wherein A is selected from the group of rare earth metals (including yttrium) and calcium, substitutable in an amount up to about 0.3 atom with a wide variety of metals, B is selected from the group of nickel and cobalt substitutable in an amount of up to about 1.5 atoms by a wide variety of metals and x is a number between 3 and 8. Another class of hydridable materials comprises pure or substantially pure elements from the group of magnesium, titanium, vanadium and niobium. Another class comprises $AD_m$ alloys where A is one or more rare earth metals including yttrium, D is one or both of cobalt and nickel or a mixture thereof with one or more of the elements Fe, Cu and Mn and m satisfies $1/3 \le m < 3$. Still further examples of hydridable materials are RMg and RNiMg (where R = rare earth) series alloys disclosed in U.S. Patent No. 4,126,242, titanium-vanadium-iron alloys disclosed in U.S. Patent No. 4,111,689; titanium-manganese alloys as well as conventional Ti-Ni and Ti-Fe alloys disclosed in U.S. Patent No. 4,144,103 and conventional Zr-Ni,Mg-Ni and Mg-Cu alloys disclosed in U.S. Patent No. 4,110,425. Other alloy and intermetallic compound systems involving two, three, four, five and even more elements are also known to form chemically reversible hydrides and are included within the ambit of the term hydridable material for purposes of the present specification and claims. The following are examples of suitable hydridable materials: $Fe_{0.8}Ni_{0.2}Ti$, $ZrCr_{0.5}Fe_{1.5}$, $LaNi_{4.7}Al_{0.3}$, $MNi_4Al$, (where M is mischmetal), $LaNi_4Cu$, and $La_{1-x}Ca_xNi_5$ (where $x \le 0.5$).

In practice the hydridable material should have an ambient temperature pressure plateau of less than one atmosphere, not be subject to poisoning by ammonia at the levels of concentration of ammonia in the dissociation gas stream, and not be subject to nitride formation under the operating conditions of the reactor system.

In accordance with a preferred feature of the invention the hydrides are pelletised. This obviates problems arising from hydride expansion and contraction, and also from decrepitation during use which can give rise to a high pressure drop across the reactor beds. It also prevents the problems connected with the use of fine powders. Suitable pellets for use in the present process and a process for pelletization of hydridable materials have been disclosed in European Patent Application 56724A and the use of pellets in combination with ballast material has also been disclosed in European Patent 15106B. It has been found that when used in the reactor system of the present invention: 1) pelletization does not adversely reduce the performance of the reactor during either the hydriding or dehydriding phase; 2) the pellets are stable under thermal cycling over the required temperature ranges; 3) pelletization does not reduce significantly heat transfer in the hydride bed; 4) the pellet and material can accommodate the volume changes of the hydride and can contain the fine particles; and 5) the pellets have a size and shape such that the pressure drop in the flow-through reactor is very small. Pellets may be used in conjunction with a ballast material.

The invention will now be described by reference to the accompanying drawings in which:-

Figure 1 is a schematic of a flow through reactor, shown in cross-section, for the production of hydrogen from a dissociated ammonia stream.

Figure 2 is a graph of the relationship between the temperature difference and the cycle time, illustrating the effect - predicted by the reactor model of the present invention - of decreasing the bed thickness in order to decrease cycle time.

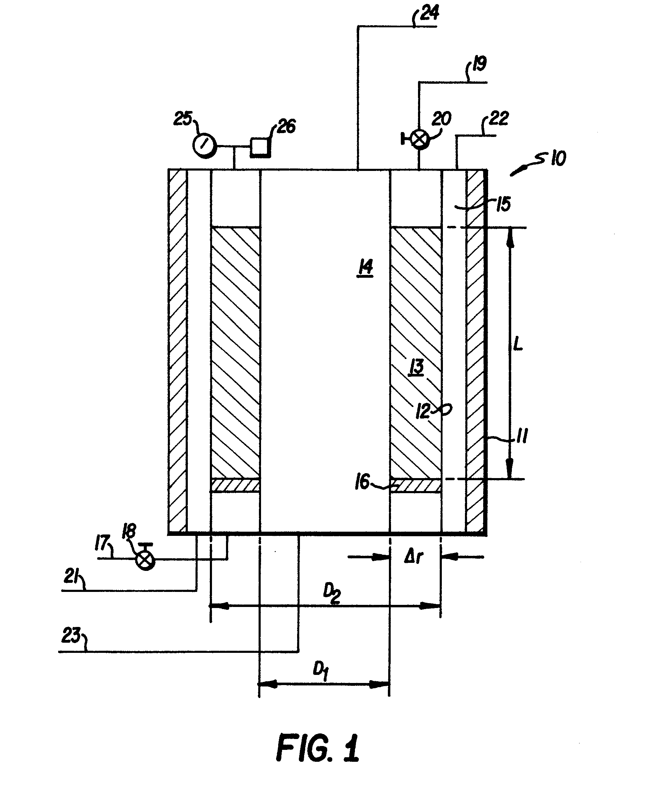

Figure 1 shows reactor 10 consisting of an insulated cyclindrical housing 11 in which a cylindrical container 12 packed with hydridable material 13 is coaxially located between inner and outer heat exchanger shells 14, 15. A support screen 16 for the pelletized hydridable material 13 is located at the bottom of cylindrical container 12, and the container 12 is also provided with inlet conduit 17 and valve 18 for admitting dissociated ammonia to hydride bed 13 and outlet conduit 19 and valve 20 for passage of effluent waste gas, or for delivery of hydrogen during desorption. Inlet and outlet conduits 21, 22 are for entry and exit of heat exchange fluid into and out of outer shell 15 and inlet and outlet conduits 23, 24 are for entry and exit of heat exchange fluid to and from inner shell 14. Pressure gauge 25 measures pressure in the hydride bed 13 and relief valve 26 is to prevent over-pressurisation of bed 13. Pelletised hydridable material is packed at a density of 1.1 to 5 $g/cm^3$ to form the hydride bed 13.

In operation dissociated ammonia is admitted through conduit 17 into the container 12 whilst cooling fluid is circulated through the inner and outer heat exchanger shells 14, 15. When hydrogen from the stream is fully absorbed on the hydride bed 13, as detected for example by assessing the hydrogen content of the effluent stream from the outlet 19, the stream of dissociated ammonia is switched to a second reactor (not shown) and valve 18 closed. When hydrogen is to be desorbed from the hydride bed heated water may be circulated through the heat exchange shells 14, 15.

An example will now be described.

The hydridable material used in the example is $LaNi_{4.7}Al_{0.3}$ which has a capacity of about 0.8 hydrogen/metal atom (H/M) at 137.9 $kN/m^2$ gauge. The absorption and desorption plateau pressures of 24.1 $kN/m^3$ gauge and 413.7 $kN/m^2$ gauge at 90°C are attractive (in the laboratory and commercially) in relation to hydrogen recovery efficiency and available thermal inputs. The alloy was pelleted with a silicone rubber binder (General Electric Ge 2567-012 clear) by the following procedure. The alloy was hydrided and dehydrided several times to produce - 325 mesh powder and finally stabilised by slow exposure of the hydrided powder to air. The powder was milled with silicone rubber in ratio 95:5, pressed in a die at 207 $MN/m^2$ cured for 16 hours at 100°C and cut into pellets (0.635 cm cubes).

The reactor was constructed of 0.318 cm stainless steel cylinder walls fixed to flanged end plates 1.27 cm thick. The end plates were bolted to 1.25 cm thick manifold plates with O-ring seals. Gas was distributed through a chamber below the porous support platform. This platform was sealed to the walls with silicone rubber to prevent channelling. The reactor was designed for pellets of lower density than the pellets actually used. As a result only about 30% of the available heat transfer surface was in contact with the pellet bed. Therefore when comparing the experimental performance with the model, the actual bed length was used rather than the length of the reactor.

The absorption and desorption tests were run in an essentially isobaric manner at nominally constant temperature of the cooling/heating water. The operating mode was selected to provide the most direct basis for comparisons and extrapolation of performance trends rather than those which would be most suited for ultimate use of the apparatus.

The temperature and flow rate of the cooling/ heated water was controlled by an external bath circulator and cooler. Gas flow was measured using electronic mass flow meters with 100 l/min. sensors. In experiments involving hydrogen separation from a mixed gas, electronic flow meter sensors were used on both the inlet and outlet gas streams. The output from these sensors were coupled to three readout units to indicate directly the 75% $H_2$ + 25% $H_2$ inlet flow, the $H_2$ absorption flow, and the $N_2$-enriched outlet flow.

The performance of the cylindrical flow-through reactor for the separation of $H_2$ from dissociated ammonia was evaluated in three parts. The first was the operation of the reactor in pure $H_2$ to provide base line data for later comparisons. The second part was the operation in a 75% $H_2$ + 25% $N_2$ mixed gas made to simulate dissociated ammonia. The third part was the comparison of the experimental results to the performance model outlined above.

### Pure Hydrogen Operation

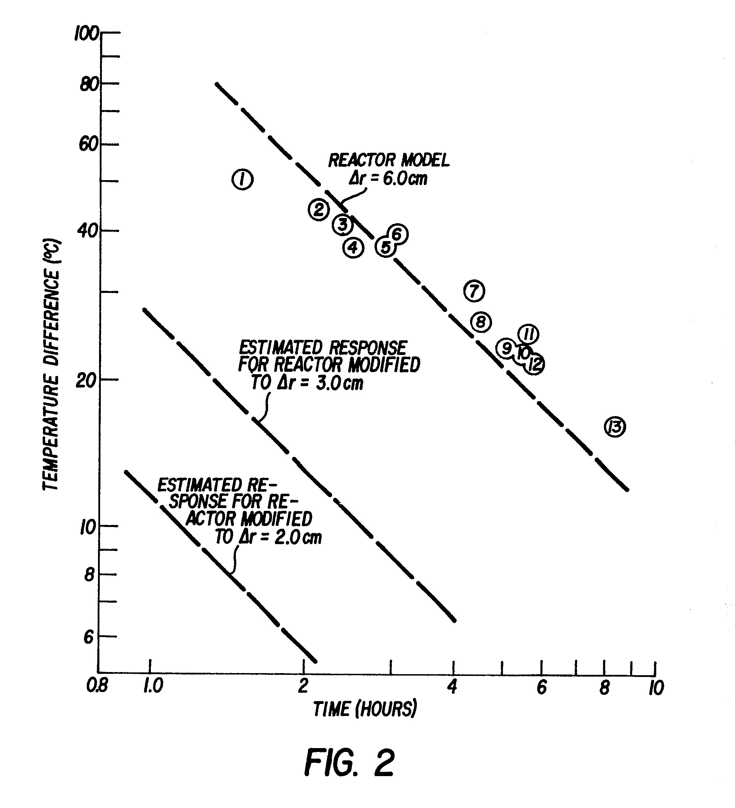

A series of absorption and desorption tests were run with pure hydrogen. The experiments were carried out at a nominal temperature of 25°C. They showed the increasing rate of absorption and temperature excursion as the charging pressure is increased. The peak temperature at each pressure was quite close to that predicted by the Van't Hoff relation for the alloy. These test results are given in the Table and in Figure 2.

### Hydrogen Separation

Hydrogen separation was evaluated using a 75% $H_2$ - 25% $N_2$ pre-mixed gas to simulate dissociated ammonia. Separations were performed using three different combinations of controlled operation parameters. Two tests were performed at a nominal temperature of 25°C and were structured to give slow and fast operation which correspond to high and medium $H_2$ recovery efficiencies. After these two tests, a pure $H_2$ adsorption was run to determine if there had been any adverse effect on the base line performance due to the mixed gas operation. This was followed by a third separation test run at a nominal temperature of 5°C. These test results are given in the Table and in Figure 2.

### TABLE

| Test No. | Test | T °C | t*, Hours | $t^*\Delta t$ | $\overline{|t\Delta T - t\Delta T|}$ | Deviation \|%\| |
|---|---|---|---|---|---|---|
| 1 | A | 50 | 1.75 | 87.5 | 26.6 | 23.3 |
| 2 | B | 44 | 2.15 | 94.6 | 19.5 | 17.1 |
| 3 | B | 41 | 2.40 | 98.4 | 15.7 | 13.8 |
| 4 | A | 37 | 2.50 | 92.5 | 21.6 | 18.9 |
| 5 | A | 37 | 2.90 | 107.3 | 6.8 | 6.0 |
| 6 | A | 39 | 3.10 | 120.9 | 6.8 | 6.0 |
| 7 | C | 30 | 4.40 | 132.0 | 17.9 | 15.7 |
| 8 | A | 26 | 4.50 | 117.0 | 2.9 | 2.5 |
| 9 | C | 23 | 5.10 | 117.3 | 3.2 | 2.8 |
| 10 | A | 22 | 5.40 | 118.8 | 4.7 | 4.1 |
| 11 | B | 25 | 5.60 | 140.0 | 25.9 | 22.7 |
| 12 | C | 22 | 5.60 | 123.2 | 9.1 | 8.0 |
| 13 | C | 16 | 8.40 | 134.4 | 20.3 | 17.8 |
| | | | Average | 114.1 | | 12.2 |

A = Absorption Tests - UHP-$H_2$

B = $H_2$ Separation Tests - 75% $H_2$ + 25% $N_2$

C = Desorption Tests - UHP-$H_2$

*t = Time for absorption or desorption to 95% of capacity.

The separation test results show overall that good $H_2$ separation was achieved, and that it was in reasonable accord with the performance anticipated from the pure hydrogen base line data. Separation efficiencies for the tests fell between 65 and 70%.

### Reactor Model

The performance model previously described predicts from Equation 4 that for a given system

$$t \Delta T = C \tag{5}$$

where the constant, C, in Equation 5 is given by

$$C = 4.34 \times 10^{-6} (D_2 - D_1)^2 \Delta H \rho W/K \tag{6}$$

when t is in hours.

From the data given in Table I and plotted in Figure 2 one finds a value for C of 114.1 hr·K with a maximum deviation of 23.3% and an average deviation of 12.2%. For the $LaNi_{4.7}Al_{0.3}$ alloy pellets used as the hydridable material in the prototype reactor $\rho$ = 3.2 g/cm³, W = 0.0057 moles of hydrogen per g of hydride and $\Delta H$ = 7200 cal-mole. The reactor bed thickness, $\Delta r$, was 6.0 cm, thus $D_2 - D_1 = \Delta D = 2 \Delta r = 12$ cm. Employing these values in Equation 6 gives a value for K of 7.19 x $10^{-4}$ cal.cm$^{-1}$.sec$^{-1}$.K$^{-1}$. The best independent determination of the thermal conductivity of the pellets gave a value for K of 8.2 x $10^{-4}$ cal.cm$^{-1}$.sec$^{-1}$.K$^{-1}$. There is thus good agreement between the behaviour of the flow-through reactor predicted by the performance model and the experimentally observed behaviour.

The general agreement between test data and the reactor model establishes the utility of the model for predicting effects of process or system variations.

For example, the original concept aim was that of a system with a 1 hr cycle time for a 10°C temperature difference. Several variations of the reactor size are shown in Figure 2, with reactor bed thickness, $\Delta r$, ranging from 6 cm to 2 cm. Objectives may be accomplished without change in any other dimension of the reactor. This is possible because the void volume above the pellet bed is about 3 times the volume of the bed itself.

Other alternatives are also possible. For example, if a hydride bed thickness of 2 cm presented any problem, a value of 3 cm could be considered along with certain other changes. At 3 cm bed thickness, a 2.5 hr cycle time would be required for a 10°C temperature difference. A 1 hr cycle time could be achieved if the temperature differences was increased to 25°C. This could be done by increasing the system pressure or by lowering the plateau temperature of the alloy by 15°C (corresponding to a factor of about 2 decrease in the isotherm pressure).

Another factor implicit in the model is that the bed functions relatively uniformly over its entire length. If a breakthrough front becomes well defined, then the model only applies in the region of the front. This could be accounted in the model, to a first approximation, by modification of the time term such that:

$$t = \frac{\text{front length}}{\text{bed length}} \times \text{cycle time} \qquad (7)$$

This effect could become significant as the bed length increases. The 15 cm bed length used in the demonstration test series showed only slight evidence of non-uniform bed operation. However, decreasing the bed thickness to 3 or 2 cm, as in the above examples, would increase the length to 30 or 45 cm. At these lengths, non-uniform bed operation is more likely and may require introduction of Equation (7) into the model. The effect will be to increase the cycle time predicted by the model.

Since the above considerations take into account the thermal conductivity and density of the pellets, system variations might be required for a different pellet formulation. It can be seen however that considerable system flexibility exists which can be predicted on the results of the demonstration reactor and tailored to the needs of the user. Following the above tests the silicone bonded pellets were removed from the reactor and were examined physically. There was no evidence of particulate formation, settling or expansion, which changes could have lead with continued cycling to packing and increasing back pressure within the bed. The pellets appeared to be unchanged from their initial condition.

- 14 -
Claims

1.       A reactor system for the delivery of 28
to 2800 m³/day of hydrogen on site from a dissociated
ammonia feed stream by use of a bed of hydridable
material which exothermically and selectively absorbs
hydrogen from the feed stream and endothermically desorbs
hydrogen on demand characterised in that the system
comprises at least one flow through reactor 10 having
inner and outer heat exchange shells 14, 15 with a bed
of hydridable material 13 located coaxially therebetween
and means 17 for introducing, in use, the feed stream
to the hydride bed 13 and means 19 for permitting the flow
of waste gas or hydrogen therefrom with means for
providing uniform gas flow with low pressure drop across
the bed 13, and means 21, 22, 23, 24 for circulating fluid
through the heat exchange shells 14, 15 whereby heat may
be extracted therefrom during absorption of hydrogen
from the feed stream and may be supplied thereto when
hydrogen is desorbed from the hydride bed 13.

2.       A reactor system as claimed in claim 1 in
which the system comprises two or more flow through
reactors in tandem such that in use at least one reactor
is in the desorption mode.

3.       A reactor system  as claimed in claim 1
or claim 2 in which the hydridable material is pelletised
in a porous plastic.

4.       A reactor system as claimed in claim 3 in
which the hydridable material is used in combination with
a ballast material.

5.       A reactor system as claimed in any preceding
claim in which the hydridable material is one of the
following alloys:-  $Fe_{0.8}Ni_{0.2}Ti$, $ZrCr_{0.5}Fe_{1.5}$,
$LaNi_{4.7}Al_{0.3}$, $MNi_4Al$ (where M is mischmetal), $LaNi_4Cu$
and $La_{1-x}Ca_xNi_5$ (where $x \leq 0.5$).

6.       A reactor system as claimed in any preceding
claim in which the reactor 10 comprises an insulated cyclindrical housing 11 and the hydridable material 13 is disposed in a cylindrical container 12 located coaxially between inner 14 and outer 15 heat exchanger shells.

7.     A reactor system as claimed in claim 6 in which the hydrogen flow rate F can be predicted semi quantitatively by the following equation:-

$$F = (D_1 + D_2)^2 L^2 \pi K \rho \Delta T / \Delta H t$$

where

| | | |
|---|---|---|
| $F$ | = | Hydrogen flow rate, moles/sec. |
| $D_1$ | = | Diameter of inner wall of the hydride container 12, cm |
| $D_2$ | = | Diameter of outer wall of the hydride container 12, cm |
| $L$ | = | Length of hydride bed 13, cm |
| $\pi$ | = | Constant = 3.14 |
| $K$ | = | Thermal conductivity of hydride bed 13, $cal.sec^{-1}.cm^{-1}.K^{-1}$ |
| $\rho$ | = | Density of hydride bed 13, g/cc |
| $\Delta T$ | = | Temperature difference between reactor wall 11 and mid-point of the hydride bed 13, K |
| $\Delta H$ | = | Heat of adsorption of hydride, cal/mole |
| $t$ | = | Charging or discharge time, sec. |

and $D_2$ is related to $D_1$ by the relationship

$$D_2 = D_1 + 8 [Kt \Delta T / \Delta H \rho W]^{1/2}$$

where     W = Moles of hydrogen per g of hydride.

FIG. 1

FIG. 2